# EUROPÄISCHE PATENTANMELDUNG

(11) **EP 0 833 491 A2**
(43) Veröffentlichungstag der Anmeldung: **01.04.1998**
(21) Anmeldenummer: 97115757.3
(22) Anmeldetag: 10.09.1997
(51) Int. Cl.: H04M 3/50, H04M 3/60

(54) **Verfahren zum Steuern einer Chef-Sekretär-Anlage**

(30) Priorität: 30.09.1996 DE 19640289
(71) Anmelder: SIEMENS AKTIENGESELLSCHAFT, 80333 München (DE)
(72) Erfinder: Kopitar, Friedrich, 3492 Etsdorf (AT); Rechberger, Peter, 1220 Wien (AT); Pochmann, Alois, 1190 Wien (AT); Lebduska, Christian, 1030 Wien (AT)

(57) **Zusammenfassung**

Es wird ein Verfahren zum Steuern einer Chef-Sekretär-Anlage angegeben, bei der im Normalzustand ein für das Chef-Endgerät kommender Ruf von einer Vermittlungseinrichtung zum Sekretär-Endgerät vermittelt wird. Bei für das Chef-Endgerät kommendem Ruf wird überprüft, ob die Rufnummer des Teilnehmers mit einer priorisierten, gespeicherten Rufnummer übereinstimmt. Bei Übereinstimmung vermittelt die Vermittlungseinrichtung des kommenden Ruf zum Chef-Endgerät.

## Beschreibung

Die Erfindung betrifft ein Verfahren zum Steuern einer aus einem Chef-Endgerät und einem Sekretär-Endgerät bestehenden Chef-Sekretär-Anlage, bei der ein für das Chef-Endgerät kommender Ruf im Normalzustand der Chef-Sekretär-Anlage von einer Vermittlungseinrichtung zum Sekretär-Endgerät vermittelt wird. Solche Chef-Sekretär-Anlagen sind sowohl als Endgerätekonfiguration zum Anschließen an ein globales ISDN-Netz als auch als Endgerätekonfiguration von Nebenstellenanlagen, wie z.B. der von der Siemens AG kommerziell vertriebenen Anlage HICOM, bekannt. Bei solchen digitalen Nebenstellenanlagen und bei solchen globalen ISDN-Netzen wird jeweils die Rufnummer des rufenden Teilnehmers übermittelt und steht somit einer Vermittlungseinrichtung zum Vermitteln kommender Rufe zum Chef-Endgerät oder zum Sekretär-Endgerät zur Verfügung.

Außerdem sind digitale Nebenstellenanlagen mit einem Leistungsmerkmal "Selektiver Anrufschutz" oder "Selektive Anrufumleitung" bekannt, bei denen in einem Speicher eine einem Endgerät zugeordnete priorisierte Rufnummer speicherbar ist. Bei Übereinstimmung dieser gespeicherten, priorisierten Rufnummer mit der Rufnummer des rufenden Teilnehmers eines für das Endgerät kommenden Rufs werden entweder die Anrufschutzfunktion oder die Anrufumleitungsfunktion nicht ausgeführt, sondern der Ruf wird zu dem Endgerät vermittelt.

Aufgabe der Erfindung ist es, die Funktionsweise einer Chef-Sekretär-Anlage komfortabler zu gestalten, insbesondere dem Benutzer des Chef-Endgeräts mehr Freiheitsgrade einzuräumen.

Diese Aufgabe löst die Erfindung durch ein Verfahren mit den Merkmalen des Anspruches 1. Günstige Ausgestaltungen sind Gegenstand von Unteransprüchen.

Bei einem erfindungsgemäßen Verfahren zum Steuern einer Chef-Sekretär-Anlage, bei der im Normalzustand der Chef-Sekretär-Anlage ein für das Chef-Endgerät kommender Ruf von einer Vermittlungseinrichtung zum Sekretär-Endgerät vermittelt wird, wird überprüft, ob die Rufnummer des Teilnehmers mit einer priorisierten, gespeicherten Rufnummer übereinstimmt. Bei Übereinstimmung vermittelt die Vermittlungseinrichtung des kommenden Ruf zum Chef-Endgerät.

Der Rufnummernvergleich kann hierbei abhängig von der Art der Vermittlungseinrichtung bzw. der Kommunikationsanlage entweder durch die Vermittlungssteuerung oder durch eine spezielle Leistungsmerkmalsteuerung erfolgen.

Die Erfindung ermöglicht es dem Benutzer eines Chef-Endgerätes, Anrufe von ihm wichtig erscheinenden Teilnehmern, wie z.B. einem Vorgesetzen oder einem Familienmitglied unmittelbar selbst entgegenzunehmen.

In einer günstigen Ausgestaltungsform eines erfindungsgemäßen Verfahrens ist darüber hinaus vorgesehen, daß bei für das Chef-Endgerät aktiviertem Leistungsmerkmal "Anrufumleitung zur Voicemail", das ein Verbinden für das Chef-Endgerät kommender Rufe zu einer Anrufbeantworterfunktion bewirkt, ebenfalls bei für das Chef-Endgerät kommendem Ruf die Rufnummer des rufenden Teilnehmers mit den gespeicherten priorisierten Rufnummern verglichen wird und daß der kommende Ruf bei Übereinstimmung an das Chef-Endgerät vermittelt wird.

Das Leistungsmerkmal "Anrufumleitung zur Voicemail" wird üblicherweise aktiviert, wenn der Benutzer des Chef-Endgerätes nicht gestört werden möchte, das Sekretär-Endgerät jedoch nicht besetzt ist. Auch in einem solchen Falle kann der Benutzer des Chef-Endgerätes durch Eingabe entsprechender priorisierter Rufnummern in einen Speicher veranlassen, daß mit Hilfe dieser Ausgestaltungsform eines erfindungsgemäßen Verfahrens ein von ihm wichtig erscheinenden Teilnehmern kommender Ruf an das Chef-Endgerät vermittelt wird.

In einer anderen Weiterbildung eines erfindungsgemäßen Verfahrens wird auch dann, wenn für das Chef-Endgerät ein Leistungsmerkmal "Anrufschutz" aktiviert ist, bei einem für das Chef-Endgerät kommendem Ruf die Rufnummer des rufenden Teilnehmers mit den gespeicherten priorisierten Rufnummern verglichen und ein kommender Ruf wird bei Übereinstimmung an das Chef-Endgerät vermittelt.

Das Leistungsmerkmal "Anrufschutz" bewirkt üblicherweise, daß für das Chef-Endgerät kommende Rufe zum Sekretär-Endgerät vermittelt werden. Die letztgenannte Weiterbildung eines erfindungsgemäßen Verfahrens ermöglicht ist folglich dem Benutzer eines Chef-Endgerätes, auch bei Aktivieren des Leistungsmerkmals "Anrufschutz" ihm wichtig erscheinende kommende Rufe entgegenzunehmen.

Wenn in einer Chef-Sekretär-Anlage für das Chef-Endgerät das Leistungsmerkmal "Anrufumleitung im Besetztfall" aktiviert ist, so werden für das Chef-Endgerät kommende Rufe üblicherweise zum Sekretär-Endgerät vermittelt, sofern das Chef-Endgerät sich im Besetztzustand befindet. Eine besonders günstige Weiterbildung eines erfindungsgemäßen Verfahrens sieht vor, daß bei für das Chef-Endgerät aktiviertem Leistungsmerkmal *"*Anrufumleitung im Besetztfall*"* bei für das Chef-Endgerät kommendem Ruf die Rufnummer des rufenden Teilnehmers mit den gespeicherten priorisierten Rufnummern verglichen wird und daß der kommende Ruf bei Übereinstimmung an dem Chef-Endgerät durch eine Anklopffunktion signalisiert wird.

Eine andere Weiterbildung eines erfindungsgemäßen Verfahrens sieht vor, daß bei für das Chef-Endgerät kommendem Ruf, wenn das Chef-Endgerät sich im Besetztzustand befindet, die Rufnummer des rufenden Teilnehmers mit den gespeicherten priorisierten Rufnummern verglichen wird und daß die Rufnummer oder der Name des rufenden Teilnehmers bei Übereinstimmung auf einer Anzeigeeinrichtung des Chef-Endgeräts angezeigt wird.

Die letztgenannten Ausgestaltungen eines erfindungsgemäßen Verfahrens ermöglichen es dem Benutzer des Chef-Endgerätes einer Chef-Sekretär-Anlage, von ihm wichtig erscheinenden kommenden Rufen Kenntnis zu erhalten, auch wenn er das Chef-Endgerät bereits belegt hat.

Nachstehend wird die Erfindung anhand eines Ausführungsbeispiels unter Bezugnahme auf die Figur näher erläutert.

Die Figur zeigt in schematischer Darstellung das Blockschaltbild einer Kommunikationsanlage mit Chef-Sekretär-Anlage als Endgerätekonfiguration.

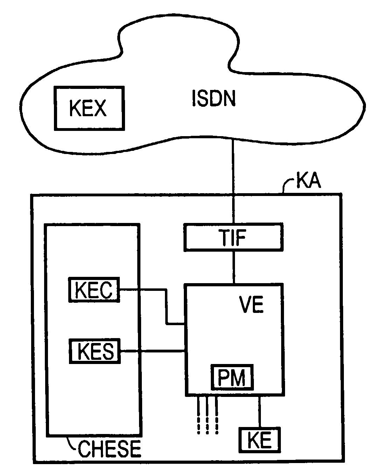

In Fig. 1 ist eine Kommunikationsanlage KA dargestellt, die an ein öffentliches digitales Kommunikationsnetz ISDN angeschlossen ist. Die Kommunikationsanlage KA enthält u.a. eine Vermittlungseinrichtung VE zum Auf- und Abbau von Verbindungen zu Endgeräten KEC, KES, KE und/oder zum öffentlichen ISDN-Netz ISDN. Die Vermittlungseinrichtung VE ist über eine Netzschnittstelle TIF mit dem öffentlichen digitalen Netz ISDN verbindbar und außerdem an Kommunikationsendgeräte KEC, KES, KE. Eine dargestellte Endgerätekonfiguration, bestehend aus einem Chef-Endgerät KEC und einem Sekretär-Endgerät KES ist hierbei als Chef-Sekretär-Anlage CHESE ausgeführt. Der interne Aufbau einer Vermittlungseinrichtung VE ist hinlänglich bekannt und für die vorliegende Erfindung nur von untergeordneter Bedeutung. Auf eine nähere Erläuterung wird daher hier verzichtet. Die gezeigte Vermittlungseinrichtung VE ermöglicht das Anschließen einer Vielzahl von Endgeräten. Abgesehen von den Endgeräten der Chef-Sekretär-Anlage CHESE ist in der Figur ein weiteres Endgerät KE beispielhaft dargestellt. Darüber hinaus ist in dem ISDN-Netz ISDN ein weiteres Endgerät KEX dargestellt.

In der Vermittlungseinrichtung VE ist ein Speicher PM zum Speichern von priorisierten Rufnummern vorgesehen. Hierbei ist ein nicht näher dargestellter Speicherbereich dem Chef-Endgerät KEC fest zugeordnet. Der Speicher PM muß nicht unmittelbar innerhalb der Vermittlungseinrichtung VE angeordnet sein, sondern kann auch in einem nicht dargestellten, an die Vermittlungseinrichtung angeschlossenen Server oder gegebenenfalls sogar im Endgerät enthalten sein.

Im Normalzustand der Chef-Sekretär-Anlage wird ein von dem externen Endgerät KEX oder von dem Endgerät KE für das Chef-Sekretär-Anlage KEC kommender Ruf von der Vermittlungseinrichtung VE an das Sekretär-Endgerät KES vermittelt. Das Sekretär-Endgerät KES kann dann den Ruf bedarfsweise zum Chef-Endgerät KEC weiterverbinden oder eine Bedienperson kann durch eine Aktion den kommenden Ruf zum Chef-Endgerät KEC umleiten.

Wenn für das Chef-Endgerät KEC im Speicher PM eine oder mehrere priorisierte Rufnummern gespeichert sind und ein Vergleich dieser gespeicherten Rufnummern mit der mit der Signalisierung des kommenden Rufs übermittelten Rufnummer des rufenden Teilnehmers übereinstimmt, wird der kommende Ruf erfindungsgemäß unmittelbar zum Chef-Endgerät vermittelt.

## Patentansprüche

1. Verfahren zum Steuern einer aus einem Chef-Endgerät (KEC) und einem Sekretär-Endgerät (KES) bestehenden Chef-Sekretär-Anlage (CHESE), bei der ein für das Chef-Endgerät (KEC) kommender Ruf im Normalzustand der Chef-Sekretär-Anlage (CHESE) von einer Vermittlungseinrichtung (VE) zum Sekretär-Endgerät (KES) vermittelt wird, wobei die Rufnummer des rufenden Teilnehmers der Vermittlungseinrichtung (VE) übermittelt wird und wobei in einem Speicher (PM) eine dem Chef-Endgerät (KEC) zugeordnete priorisierte Rufnummer speicherbar ist,
**dadurch gekennzeichnet,**
daß bei für das Chef-Endgerät (KEC) kommendem Ruf im Normalzustand der Chef-Sekretär-Anlage (CHESE) überprüft wird, ob die Rufnummer des rufenden Teilnehmers mit einer priorisierten Rufnummer im Speicher (PM) übereinstimmt und daß die Vermittlungseinrichtung (VE) den kommenden Ruf bei Übereinstimmung zum Chef-Endgerät (KEC) vermittelt.

2. Verfahren nach Anspruch 1,
**dadurch gekennzeichnet,**
daß bei für das Chef-Endgerät (KEC) aktiviertem Leistungsmerkmal *"*Anrufumleitung zur Voicemail*"*, das ein Verbinden für das Chef-Endgerät (KEC) kommender Rufe zu einer Anrufbeantworterfunktion bewirkt, bei für das Chef-Endgerät (KEC) kommendem Ruf die Rufnummer des rufenden Teilnehmers mit den gespeicherten priorisierten Rufnummern verglichen wird und daß der kommende Ruf bei Übereinstimmung an das Chef-Endgerät (KEC) vermittelt wird.

3. Verfahren nach Anspruch 1 oder 2,
**dadurch gekennzeichnet,**
daß bei für das Chef-Endgerät (KEC) aktiviertem Leistungsmerkmal *"*Anrufschutz*"*, das ein Vermitteln für das Chef-Endgerät (KEC) kommender Rufe zum Sekretär-Endgerät (KES) bewirkt, bei für das Chef-Endgerät (KEC) kommendem Ruf die Rufnummer des rufenden Teilnehmers mit den gespeicherten priorisierten Rufnummern verglichen wird und daß der kommende Ruf bei Übereinstimmung an das Chef-Endgerät (KEC) vermittelt wird.

4. Verfahren nach Anspruch 1, 2 oder 3,
**dadurch gekennzeichnet,**
daß bei für das Chef-Endgerät (KEC) aktiviertem Leistungsmerkmal "Anrufumleitung im Besetztfall", das ein Vermitteln für das Chef-Endgerät (KEC) kommender Rufe zum Sekretär-Endgerät (KES) bewirkt, bei für das Chef-Endgerät (KEC) kommendem Ruf die Rufnummer des rufenden Teilnehmers mit den gespeicherten priorisierten Rufnummern verglichen wird und daß der kommende Ruf bei Übereinstimmung an dem Chef-Endgerät (KEC) durch eine Anklopffunktion signalisiert wird.

5. Verfahren nach einem der vorhergehenden Ansprüche,
**dadurch gekennzeichnet,**
daß bei für das Chef-Endgerät (KEC) kommendem Ruf, wenn das Chef-Endgerät (KEC) sich im Besetztzustand befindet, die Rufnummer des rufenden Teilnehmers mit den gespeicherten priorisierten Rufnummern verglichen wird und daß die Rufnummer oder der Name des rufenden Teilnehmers bei Übereinstimmung auf einer Anzeigeeinrichtung (AE) des Chef-Endgeräts (KEC) angezeigt wird.
